Europäisches Patentamt

European Patent Office

Office européen des brevets

(19)

(11) Numéro de publication : **0 454 516 A1**

## (12) DEMANDE DE BREVET EUROPEEN

(21) Numéro de dépôt : **91400862.8**

(22) Date de dépôt : **29.03.91**

(51) Int. Cl.$^5$ : **G01S 17/88, G01S 17/87**

(30) Priorité : **20.04.90 FR 9005052**

(43) Date de publication de la demande :
**30.10.91 Bulletin 91/44**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt (FR)**

(72) Inventeur : **N'Guyen, Hoang Giang**
**9, rue de Belfort**
**F-91130 Ris-Orangis (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) **Dispositif de visualisation d'obstacles, notamment pour véhicule automobile.**

(57) Le dispositif visualise des obstacles présents sur la trajectoire du véhicule, ces obstacles étant perçus par des organes réfléchissant dans l'infrarouge tels que les réflecteurs de feux "stop" d'un autre véhicule présent dans le champ ouvert à la trajectoire du véhicule équipé du dispositif. Celui-ci comprend a) une première caméra vidéo à capteur CCD (1) sensible aux rayonnements d'un domaine spectral couvrant le domaine infrarouge et plus large que celui-ci pour saisir une image vidéo du champ ouvert à la progression du véhicule sur sa trajectoire, b) une deuxième caméra vidéo à capteur CCD (2) pour saisir une autre image de ce champ, dans le domaine du rayonnement visible complétant le domaine infrarouge pour couvrir ensemble sensiblement le domaine de sensibilité du premier moyen, et c) des moyens électroniques (11) de traitement par différence des deux images vidéo ainsi obtenues pour former une troisième image vidéo du champ ouvert au véhicule, contenant seulement une image de contraste relevé de l'obstacle.

FIG.: 1

La présente invention est relative à un dispositif de visualisation d'obstacles et, plus particulièrement, à un tel dispositif conçu pour visualiser un obstacle présent sur la trajectoire d'un véhicule automobile, cet obstacle réfléchissant ou émettant un rayonnement d'un domaine spectral prédéterminé.

Pour visualiser des obstacles présents dans le champ ouvert à la trajectoire d'un véhicule automobile, notamment lorsque la visibilité est mauvaise, on a proposé d'installer dans le véhicule une ou plusieurs caméras vidéo équipées de cibles ou capteurs CCD à couplage de charge et de filtres adéquats pour saisir des images de ce champ, et de traiter électroniquement les images saisies par la (les) caméra(s) de manière à faire ressortir certaines caractéristiques de ces images correspondant à des obstacles tels que des véhicules présents dans le champ. Des algorithmes complexes appliqués aux caractéristiques optiques des différents pixels de l'image sont alors nécessaires pour extraire de cette image le contour de la chaussée par exemple puis ceux des véhicules circulant sur cette chaussée. De tels calculs exigent, pour être exécutés en temps réel, des mémoires de grandes capacités et une très grande puissance de calcul, permettant l'exécution de quelques centaines de millions d'instructions par seconde, par exemple. De tels moyens de traitement sont d'un coût trop élevé pour être admissibles dans un véhicule automobile, du point de vue économique.

La présente invention a donc pour but de réaliser un dispositif de visualisation d'obstacles qui soit d'un coût tel que son incorporation dans un véhicule automobile soit possible.

On atteint ce but de l'invention, ainsi que d'autres qui apparaîtront dans la suite de la présente description, avec un dispositif embarqué de visualisation d'un obstacle présent sur la trajectoire d'un véhicule automobile, cet obstacle réfléchissant ou émettant un rayonnement d'un domaine spectral prédéterminé, ce dispositif comprenant a) un premier moyen sensible aux rayonnements d'un domaine spectral couvrant le domaine prédéterminé et plus large que celui-ci, pour saisir une image vidéo du champ ouvert à la progression du véhicule sur sa trajectoire, b) un deuxième moyen de saisie d'une autre image de ce champ, sensible à des rayonnements d'un domaine spectral complétant le domaine prédéterminé pour couvrir ensemble sensiblement le domaine de sensibilité du premier moyen, et c) des moyens électroniques de traitement par différence des deux images vidéo ainsi obtenues pour former une troisième image vidéo du champ ouvert au véhicule, contenant seulement une image de contraste relevé de l'obstacle.

Les moyens électroniques utilisés pour traiter par différence, pixel par pixel, les deux images vidéo, sont beaucoup moins importants que ceux nécessaires à l'extraction de contour et/ou à la reconnaissance de forme, opérations qui mettent en oeuvre des algorithmes de traitement complexes, comme cela est connu du spécialiste. Suivant l'invention, il est alors possible de visualiser un obstacle avec des moyens électroniques de traitement de coût raisonnable, incorporables à un véhicule automobile.

Suivant une mise en oeuvre de l'invention, utilisable quand le domaine spectral prédéterminé dans lequel rayonne l'obstacle est celui du rayonnement infrarouge, le domaine spectral de sensibilité du premier moyen de saisie couvre le domaine visible et le domaine infrarouge, le domaine spectral de sensibilité du deuxième moyen de saisie couvrant le seul domaine visible.

Selon un premier mode de réalisation de l'invention, le premier moyen de saisie est constitué par une caméra vidéo à capteur CCD, éventuellement équipée d'un filtre infrarouge. Le deuxième moyen de saisie est constitué par une caméra vidéo à capteur CCD équipée d'un filtre transmettant les rayonnements du seul domaine visible.

Selon un deuxième mode de réalisation de l'invention, les premier et deuxième moyens de saisie d'images vidéo comprennent des premier et deuxième objectifs formant partie d'une caméra vidéo à capteur CCD et équipés de moyens optiques déflecteurs pour projeter successivement sur ce capteur des images du même champ, formées par les premier et deuxième objectifs.

Selon un troisième mode de réalisation de l'invention, les premier et deuxièmme moyens de saisie d'images vidéo comprennent un objectif unique formant partie d'une caméra vidéo à capteur CCD équipée de moyens de filtrage agencés pour assurer que deux trames d'images vidéo successives saisies par la caméra correspondent à des images filtrées dans le domaine visible et dans le domaine infrarouge, respectivement.

Dans tous les modes de réalisation, les moyens électroniques de traitement des images vidéo saisies assurent une soustraction de signaux vidéo pixel par pixel dans des trames de tels signaux correspondant à deux images d'un même champ, constituées de rayonnements de deux domaines spectraux présentant au moins une partie non commune, pour former une trame de signaux vidéo contenant l'image de l'obstacle seulement. Ces moyens électroniques de traitement peuvent comprendre en outre des moyens de modification des histogrammes des images vidéo saisies, préalablement à la soustraction pixel par pixel des signaux vidéo représentatifs de ces images, pour accroître le contraste de l'image finale obtenue.

Le dispositif suivant l'invention est conçu notamment pour visualiser un obstacle constitué par un véhicule automobile placé dans le champ ouvert à la progression du véhicule dans lequel le dispositif est embarqué. Le dispositif comprend alors en outre une source de rayonnement infrarouge éclairant ce champ, l'obstacle constitué par le véhicule place dans le champ étant visualisé par les images de réflecteurs de ce rayonnement placés sur le véhicule formant obstacle.

D'autres caractéristiques et avantages du dispositif suivant l'invention apparaîtront à la lecture de la description qui va suivre et à l'examen du dessin annexé dans lequel :

- la figure 1 est un schéma d'un premier mode de réalisation du dispositif de visualisation selon l'invention,

- la figure 2 représente schématiquement une caméra vidéo incorporable au dispositif de la figure 1,

- la figure 3 représente les graphes des transmittances spectrales de filtres et le graphe de la sensibilité spectrale de capteurs CCD équipant des caméras vidéo, utilisés dans le dispositif suivant l'invention,

- la figure 4 est un schéma d'une variante d'un dispositif de visualisation à deux caméras, suivant l'invention,

- la figure 5 est un schéma d'un deuxième mode de réalisation du dispositif suivant l'invention, et

- la figure 6 est un schéma d'un troisième mode de réalisation du dispositif suivant l'invention.

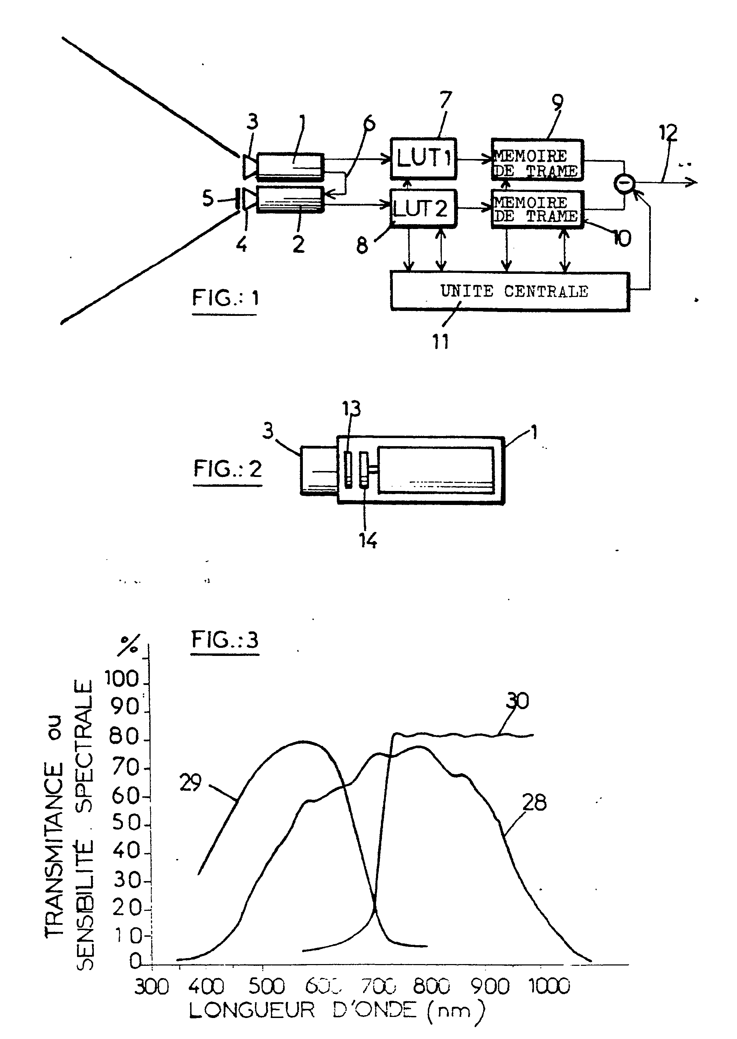

On se réfère à la figure 1 du dessin annexé où il apparaît que le dispositif suivant l'invention, dans ce premier mode de réalisation, comprend des premier et deuxième moyens de saisie d'images constitués par des caméras vidéo 1 et 2 respectivement. De préférence ces caméras vidéo sont du type qui comprennent des capteurs CCD (à couplage de charge). Ces capteurs étant constitués par des composants "état solide", les caméras comprenant de tels capteurs sont moins fragiles que les caméras vidéo classiques à tube Vidicon, par exemple. Les caméras vidéo à capteurs CCD conviennent ainsi mieux pour être embarquées dans un véhicule qui est appelé à subir des chocs en fonction de l'état de la route.

Sur la figure 3, on a représenté en 28 le graphe de la courbe de sensibilité spectrale d'une caméra à capteur CCD typique. Il apparaît sur cette figure que cette sensibilité spectrale s'étend sur un large domaine qui couvre à la fois le domaine visible (entre 400 et 700 nanomètres) et le domaine infrarouge (entre 700 et 1200 nanomètres ). Sur cette même figure 3, on a représenté en 29 le graphe de la transmittance spectrale d'un filtre optique passe-bande couvrant le domaine visible entre 400 et 700 nanomètres.

Suivant la présente invention, on équipe la caméra 2 du dispositif suivant l'invention d'un tel filtre 5 couvrant l'objectif 4 de cette caméra alors que l'objectif 3 de l'autre caméra n'est équipé d'aucun filtre. Bien entendu le filtre 5 pourrait être situé aussi derrière l'objectif 4. Les deux objectifs 3 et 4 présentent les mêmes caractéristiques optiques.

Les deux caméras 1 et 2 sont synchronisées par l'intermédiaire d'un fil de synchronisation 6. Les signaux vidéo issus des caméras 1 et 2 sont dirigés vers des mémoires d'images 7, 8 respectivement, munies éventuellement de tables de conversion d'échelle de gris LUT 1 et LUT 2 ( de l'anglais look-up table ). Ces tables de conversion permettent de modifier l'histogramme de chaque image, pour un but que l'on expliquera plus loin. Les deux images saisies ainsi traitées sont ensuite mémorisées dans des mémoires de trames 9 et 10. Une unité centrale 11 coordonne le fonctionnement des mémoires 7, 8, 9, 10 et commande la soustraction, pixel par pixel des trames vidéo contenues dans les mémoires 9 et 10, des signaux représentatifs de trames de "différence" étant ainsi disponibles sur une ligne 12 en vue d'une visualisation de ces trames sur un dispositif d'affichage ( non représenté ).

On explique maintenant le fonctionnement du dispositif de la figure 1, en liaison avec l'examen des graphes représentés sur la figure 3. Sur cette figure, il est clair que la caméra 2, munie du filtre passe-bande 5 transmettant uniquement les rayonnements du domaine visible, ne "voit" pas les objets dont la réflectance ou l'albedo correspond à la plage supérieure de la bande spectrale de la caméra vidéo 1, plage qui correspond sensiblement au domaine infrarouge situé entre 700 et 1200 nanomètres, ces objets étant bien entendu perçus par la première caméra 1 qui n'est pas équipée de filtre. Les objectifs des deux caméras étant orientés pour couvrir le même champ, comme représenté à la figure 1, on comprend que la soustraction en temps réel des images délivrées par ces deux caméras fournit une image résultante ne comportant que des objets rayonnant ou réfléchissant dans la plage non couverte par le filtre 5, soit dans le domaine infrarouge.

Les traitements d'images par action sur leurs histogrammes sont bien connus. Ceux-ci pourront être utilisés (en 7 et 8) pour diminuer le contraste de l'image captée à travers le filtre 5 qui transmet les rayonnements du domaine visible. De même en modifiant l'histogramme de l'image saisie par la caméra 1 dépourvue de filtre, on peut renforcer le contraste des parties de l'image qui correspondent à des objets réfléchissant ou émettant dans l'infrarouge. Ces mesures permettent de renforcer le contraste de l'image obtenue par différence des images captées par les caméras 1 et 2.

Ainsi peut-on, suivant l'invention, visualiser et identifier des véhicules automobiles présents dans le champ des caméras 1 et 2. En effet ces véhicules comportent, à l'arrière, des feux de "stop" et, à l'avant des projecteurs, tous équipés de réflecteurs. Une source de rayonnement infrarouge est alors montée à l'avant du véhicule équipé du dispositif selon l'invention, pour projeter un faisceau de rayonnement infrarouge dans le champ ouvert à la trajectoire du véhicule, champ surveillé par les caméras 1 et 2. Si un véhicule progresse, dans ce champ, dans le même sens que le véhicule équipé du dispositif suivant l'invention, les réflecteurs associés à ces feux de stop réfléchissent vers les caméras 1 et 2 une partie du rayonnement infrarouge émis par la source montée à l'avant du véhicule équipé de ces caméras. L'image formée par la caméra 1, non équipée de filtre, comprendra donc des parties d'images correspondant à ces réflecteurs de feux de stop. Si un véhicule progresse dans le champ des caméras en sens contraire de celui du véhicule équipé du dispositif suivant l'invention, ce sont les réflecteurs des projecteurs placés à l'avant du premier véhicule qui renvoient un rayonnement infrarouge vers les caméras 1 et 2. Dans les deux cas, l'image obtenue par soustraction des images produites par ces caméras contient celle des réflecteurs du véhicule formant obstacle dans le champ.

Une telle visualisation de ces réflecteurs s'avère particulièrement utile en conduite de nuit, lorsque la visibilité est mauvaise.

En outre, on peut tirer parti du fait que les véhicules automobiles sont équipés de paires de feux ou de projecteurs disposés horizontalement dans une position fixe l'un par rapport à l'autre pour obtenir une information supplémentaire de la visualisation obtenue de ces feux. En effet, la variation de la distance des images des réflecteurs associés, dans l'image filtrée et différenciée obtenue à l'aide du dispositif selon l'invention, permet de détecter si un obstacle s'approche (la distance des images s'accroît) ou s'éloigne (la distance des images décroît) ainsi que de mesurer la vitesse de l'obstacle. Une telle information peut être extraite par des moyens électroniques de traitement d'images additionnelles et communiquée au conducteur du véhicule qui peut ainsi évaluer à tout moment la proximité de l'obstacle. L'association à ce traitement d'une détection de la forme des images des réflecteurs, permet de distinguer les voitures qui circulent en sens inverse des voitures qui circulent dans le même sens que le véhicule équipé du dispositif suivant l'invention, du fait que les réflecteurs associés aux feux de stop et aux projecteurs sont de forme différente.

On notera que l'utilisation d'une source de rayonnement infrarouge invisible à l'oeil nu, à l'avant du véhicule équipé du dispositif selon l'invention, n'est pas susceptible de gêner les autres conducteurs.

On peut améliorer encore l'image des réflecteurs d'un véhicule formant obstacle dans l'image obtenue par soustraction, en plaçant un filtre infrarouge 13 sur l'axe optique de la caméra 1, comme représenté à la figure 2 où ce filtre 13 est placé entre l'objectif 3 et un capteur CCD 14. Un tel filtre présentant une transmittance spectrale conforme au graphe 30 de la figure 3, permet d'améliorer l'élimination des objets réfléchissant ou émettant dans le domaine visible, dans l'image finale obtenue.

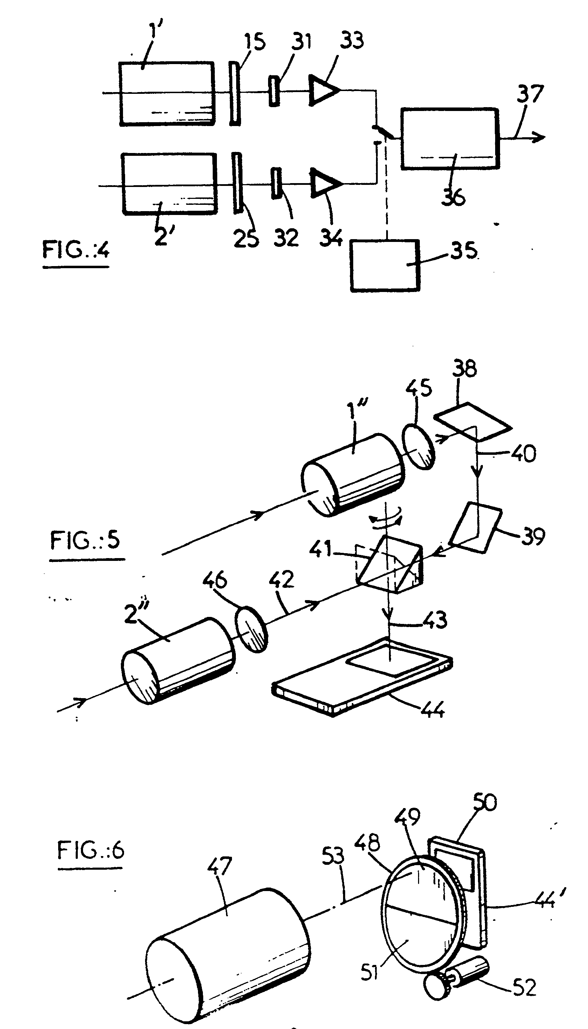

Une variante du dispositif de la figure 1 est représentée à la figure 4. Cette variante comporte deux voies optiques constituées par des objectifs 1', 2', des filtres 15, 25, des cibles ou capteurs CCD 31, 32, et des préamplificateurs 33, 34, respectivement, placés en série dans cet ordre. Le filtre 15 transmet dans le domaine visible (400-700 nanomètres) et le filtre 25 transmet dans le domaine infrarouge ( 700 - 1200 nanomètres ).

Le dispositif comprend une unité de traitement et de saisie 36 commune aux deux voies. Une commutation, à une fréquence de 50 Hz par exemple, entre chacune de ces voies et cette unité 36, est assurée par une unité de commande logique 35. Ainsi une trame d'images sur deux est saisie dans le spectre infrarouge, l'autre trame étant saisie dans le spectre visible. La sortie vidéo 37 de l'unité 36 est raccordée à une unité de traitement d'images qui effectue un prétraitement sur les niveaux de gris et la différenciation suivant l'invention entre deux trames d'images successives.

On a représenté à la figure 5 un deuxième mode de réalisation du dispositif suivant l'invention. Ce dispositif prend la forme d'une caméra vidéo munie de deux objectifs 1'', 2'' et d'un seul capteur CCD 44. Des filtres 45 et 46 transmettant dans le domaine visible et dans le domaine infrarouge respectivement, sont placés en arrière des objectifs 1'' et 2'' respectivement, sur l'axe optique de ceux-ci. Des moyens optiques déflecteurs 38, 39, 41 assurent la commutation entre chacune des voies optiques et le capteur 44. Ces moyens optiques conprennent des miroirs 38 et 39 définissant entre eux un chemin optique 40, à 90° de l'axe optique de l'objectif 13', et un prisme 41 monté à rotation autour d'un axe 43 perpendiculaire au plan du capteur 44. Dans une première position, le prisme renvoie la lumière reçue du miroir 39, en provenance de l'objectif 1'', vers le rupteur 44 et, dans une deuxième position écartée de 180° de la première, le prisme 41 éclaire le capteur 44 avec la lumière venue de l'objectif 2'', par l'intermédiaire des axes optiques 42 et 43. La rotation oscillante du prisme de renvoi 41 est synchronisée avec les signaux de "synchronisation trame", à la fréquence de 50 Hz par exemple émis par une électronique de commande associée au capteur CCD 44. Des moyens moteurs ( non représentés ) assurent cette rotation oscillante en synchronisme avec ces signaux. Dans cette configuration, le dispositif selon l'invention ne comprend qu'une seule électronique de traitement des signaux vidéo saisis par le capteur 44.

On a représenté à la figure 6 un troisième mode de réalisation du dispositif de visualisation selon l'invention. Celui-ci prend la forme d'une caméra vidéo à un seul objectif 47, cette caméra étant modifiée pour comprendre en outre un disque porte-filtres 48 placé en avant d'un capteur CCD 44'. Le disque porte-filtre peut comprendre deux secteurs demi circulaires 49 et 51 constituant respectivement un filtre transmettant dans le domaine visible et un filtre transmettant dans l'infrarouge. Un moteur 52 entraîne le disque 48 en rotation par l'intermédiaire d'une couronne dentée. Le moteur 52 est commandé de manière à faire tourner le disque à la vitesse de 50 tours par seconde, en synchronisme avec les signaux de "synchronisation trame" émis par une électronique de commande associée au capteur 44'. Ainsi, pendant deux trames successives du signal vidéo, deux filtres 49, 51 sont successivement interposés sur l'axe optique 53 de l'objectif 47 de manière à filtrer successivement dans le visible et dans l'infrarouge, la lumière reçue par le capteur 44'. Ainsi une trame d'images sur deux est formée dans le spectre infrarouge, l'autre trame étant formée dans le spectre visible. Le traitement des trames d'images obtenues est identique à celui opéré lorsque ces deux trames d'images sont saisies par des caméras distinctes.

Les divers modes de réalisation de l'invention décrits ci-dessus sont tous susceptibles de fournir une visualisation d'obstacles réfléchissant ou rayonnant dans l'infrarouge, en permettant de se passer des traitements d'images coûteux, par extraction de contour ou reconnaissance de forme, de la technique antérieure. Ils fonctionnent parfaitement en temps réel avec des électroniques de traitement d'images présentant une puissance de calcul raisonnable.

Bien entendu l'invention n'est pas limitée aux modes de réalisation décrits et représentés qui n'ont été donnés qu'à titre d'exemple. En particulier, le choix de plages jointives de la bande de sensibilité spectrale du capteur CCD utilisé pourrait être modifié pour être adapté à des obstacles réfléchissant ou rayonnant dans d'autres domaines spectraux. On pourrait, dans d'autres applications, par exemple, utiliser des filtres permettant de ne faire ressortir que des objets dont l'albedo correspond à une plage de la bande spectrale du capteur CCD autre que la plage infrarouge, par exemple la plage inférieure du domaine de longueurs d'ondes auquel le capteur CCD est sensible (de 300 à 500 nanomètres par exemple).

En outre, la présence d'un projecteur de rayonnement infrarouge sur un véhicule équipé du dispositif suivant l'invention n'est pas nécessaire si les véhicules à identifier comme obstacles sont eux-mêmes équipés de sources de rayonnement infrarouge plutôt que de réflecteurs de ce rayonnement.

## Revendications

1. Dispositif embarqué de visualisation d'un obstacle présent sur la trajectoire d'un véhicule automobile, cet obstacle réfléchissant ou émettant un rayonnement d'un domaine spectral prédéterminé, dispositif caractérisé en ce qu'il comprend :

a) un premier moyen (1) sensible aux rayonnements d'un domaine spectral couvrant le domaine prédéterminé et plus large que celui-ci pour saisir une image vidéo du champ ouvert à la progression du véhicule sur sa trajectoire,

b) un deuxième moyen (2) de saisie d'une autre image de ce champ, sensible à des rayonnements d'un domaine spectral complétant le domaine prédéterminé pour couvrir ensemble sensiblement le domaine de sensibilité du premier moyen, et

c) des moyens électroniques (11) de traitement par différence des deux images vidéo ainsi obtenues pour former une troisième image vidéo du champ ouvert au véhicule, contenant seulement une image de contraste relevé de l'obstacle.

2. Dispositif conforme à la revendication 2, caractérisé en ce que le domaine spectral prédéterminé est celui du rayonnement infrarouge, en ce que le domaine spectral de sensibilité du premier moyen de saisie (1) couvre le domaine visible et le domaine infrarouge et en ce que le domaine spectral de sensibilité du deuxième moyen de saisie (2) est le domaine visible.

3. Dispositif conforme à la revendication 2, caractérisé en ce que le premier moyen est constitué par une caméra vidéo (1) à capteur CCD.

4. Dispositif conforme à la revendication 3, caractérisé en ce qu'un filtre infrarouge (13) est placé sur l'axe optique de ladite caméra.

5. Dispositif conforme à l'une quelconque des revendications 2 et 3, caractérisé en ce que le deuxième moyen de saisie est constitué par une caméra vidéo (2) à capteur CCD équipée d'un filtre (5) transmettant le rayonnement du seul domaine visible.

6. Dispositif conforme à la revendication 2, caractérisé en ce que les premier deuxième moyens de saisie d'images vidéo comprennent des premier (1") et deuxième (2") objectifs formant partie d'une caméra vidéo à capteur CCD et équipée de moyens optiques déflecteurs (38, 39, 41) pour projeter successivement sur ce capteur des images formées par les premier et deuxième objectifs.

7. Dispositif conforme à la revendication 6, caractérisé en ce que les premier et deuxième objectifs sont équipés respectivement de filtres (45, 46) transparents aux rayonnements des domaines infrarouge et visible, respectivement.

8. Dispositif conforme à la revendication 2, caractérisé en ce que les premier et deuxième moyens de saisie d'images vidéo comprennent un objectif (47) unique formant partie d'une caméra vidéo à capteur CCD et équipée de moyens de filtrage (48, 49, 51, 52) agencés pour assurer que deux trames d'images vidéo successives saisies par la caméra correspondent à des images filtrées dans le domaine visible et dans le domaine infrarouge respectivement.

9. Dispositif conforme à la revendication 8, caractérisé en ce que les moyens de filtrage sont constitués par un disque (48) monté à rotation dans la caméra et comprenant des premier (49) et deuxième (51) filtres transparents aux infrarouges et aux rayonnements du domaine visible, respectivement, un moteur ( 52 ) entraînant ce disque en rotation de manière que ces filtres s'interposent successivement et cycliquement sur l'axe optique (53) de l'objectif (47) en synchronisme avec la saisie de trames d'images successives par la cible CCD de la caméra.

10. Dispositif conforme à l'une quelconque des revendications 1 à 9, caractérisé en ce que les moyens électroniques de traitement des images vidéo saisies assurent une soustraction de signaux vidéo pixel par pixel dans des trames de tels signaux correspondant à deux images d'un même champ constitués de rayonnements de deux domaines spectraux présentant au moins une partie non commune, pour former une trame de signaux vidéo contenant l'image de l'obstacle seulement.

11. Dispositif conforme à la revendication 10, caractérisé en ce que les moyens électroniques de traitement comprennent des moyens (7, 8) de modification des histogrammes des images vidéo saisies, préalablement à la soustraction pixel par pixel des signaux vidéo représentatifs de ces images.

12. Dispositif conforme à l'une quelconque des revendications 1 à 11, conçu pour visualiser l'obstacle constitué par un véhicule automobile placé dans le champ ouvert à la progression du véhicule dans lequel le dispositif est embarqué, caractérisé en ce qu'il comprend une source de rayonnement infrarouge éclairant ce champ, l'obstacle constitué par le véhicule placé dans le champ étant visualisé par les images de réflecteurs de ce rayonnement placés sur le véhicule formant obstacle.

13. Dispositif conforme à la revendication 12, caractérisé en ce que la troisième image vidéo contient seulement une image des réflecteurs d'une paire de feux ou de projecteurs montés sur le véhicule formant obstacle.

14. Dispositif conforme à la revendication 13, caractérisé en ce que les moyens électroniques de traitement comprennent en outre des moyens d'analyse de la troisième image vidéo, sensibles à la distance des images des réflecteurs de la paire pour en déduire la distance du véhicule formant obstacle et sa vitesse relative par rapport au véhicule dans lequel le dispositif est embarqué.

15. Véhicule automobile équipé d'un dispositif de visualisation d'obstacles conforme à l'une quelconque des revendications 1 à 14.

FIG.: 1

FIG.: 2

FIG.: 3

TRANSMITANCE ou SENSIBILITÉ SPECTRALE

%

100
90
80
70
60
50
40
30
20
10
0

300  400  500  600  700  800  900  1000

LONGUEUR D'ONDE (nm)

LUT 1

LUT 2

MEMOIRE DE TRAME

MEMOIRE DE TRAME

UNITE CENTRALE

FIG.:4

FIG.:5

FIG.:6

Office européen
des brevets

**RAPPORT DE RECHERCHE EUROPEENNE**

Numero de la demande

EP     91 40 0862

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 554 612 (OFFICE NATIONAL D'ETUDES ET DE RECHERCHES AEROSPATIALES)<br>* abrégé *<br>* page 3, ligne 3 - ligne 9 *<br>* page 3, ligne 24 - ligne 30 *<br>* page 4, ligne 1 - ligne 4 *<br>* page 5, ligne 1 - ligne 12 *<br>* page 5, ligne 21 - ligne 27 *<br>* page 5, ligne 29 - page 6, ligne 13 *<br>* page 12, ligne 5 - ligne 13 *<br>* page 21 - page 24 *<br>----- | 1,3,6, 10,12,15 | G01S17/88<br>G01S17/87 |
|  |  |  | **DOMAINES TECHNIQUES RECHERCHES (Int. Cl.5)**<br><br>G08B<br>G01S<br>G06F |

Le présent rapport a été établi pour toutes les revendications

| Lieu de la recherche | Date d'achèvement de la recherche | Examinateur |
|---|---|---|
| LA HAYE | 31 JUILLET 1991 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)